# FASCICULE DE BREVET EUROPEEN

(11) **EP 4 061 767 B1**
(45) Date de publication et mention de la délivrance du brevet: **30.08.2023**
(21) Numéro de dépôt: 20807054.0
(22) Date de dépôt: 19.11.2020
(51) Int. Cl.: B67D 7/00, B67D 7/02, B65D 25/48, B65D 47/26, B65D 47/28, B65D 47/32, F16L 37/12

(54) **EMBOUT DE RÉCIPIENT DE LIQUIDE**
AUSGUSSTÜLLE FÜR FLÜSSIGKEITSBEHÄLTER
LIQUID CONTAINER SPOUT

(30) Priorité: 21.11.2019 FR 1913030
(43) Date de publication de la demande: 28.09.2022
(73) Titulaire: TotalEnergies OneTech, 92400 Courbevoie (FR)
(72) Inventeur: MARTIN, François-Alain, 92380 GARCHES (FR); FOULONNEAU, Grégory, 92150 SURESNES (FR); BERRE, Clémence, 75018 PARIS (FR); CELERIER, Yannick, 71510 ALUZE (FR); PAVIA, Franck, 71100 CHALON SUR SAONE (FR); LAFIN, Benoît, 71370 SAINT-CHRISTOPHE-EN-BRESSE (FR)
(74) Mandataire: Lavoix
(86) Numéro de dépôt international: PCT/EP2020/082711
(87) Numéro de publication internationale: WO 2021/099479

(56) Documents cités:
- EP-A1- 1 526 319
- EP-B1- 1 526 319
- WO-A1-2017/202958
- US-A1- 2002 175 227

## Description

La présente invention concerne un embout de récipient de liquide destiné à s'adapter sur un embout de réservoir de liquide pour transférer de façon étanche le liquide du récipient au réservoir, ledit embout de récipient comprenant :
- une entrée destinée à être reliée de façon étanche au récipient de liquide,
- une sortie destinée à être reliée de façon étanche à l'embout de réservoir, ladite sortie étant en communication fluidique avec l'entrée,
- un dispositif de fermeture mobile entre une position fermée, dans laquelle le dispositif de fermeture empêche l'écoulement de liquide au travers de la sortie, et une position ouverte, dans laquelle le dispositif de fermeture autorise l'écoulement de liquide au travers de la sortie,
- un dispositif de connexion étanche de l'embout de récipient sur l'embout de réservoir destiné à coopérer de façon étanche et amovible avec l'embout de réservoir, le dispositif de connexion comprenant :
- un dispositif de serrage autour de l'embout de réservoir déplaçable entre une position écartée, dans laquelle l'embout de récipient peut être inséré autour d'une paroi externe de l'embout de réservoir, et une position serrée, dans laquelle le dispositif de serrage coopère de façon étanche avec la paroi externe de l'embout de réservoir,
- un dispositif de commande actionnable entre une position rétractée, dans laquelle le dispositif de commande ne coopère pas avec le dispositif de serrage, et une position d'écoulement, dans laquelle le dispositif de commande exerce une force de serrage sur le dispositif de serrage dans sa position serrée, le déplacement du dispositif de commande de la position rétractée à la position d'écoulement entraînant le déplacement du dispositif de serrage de la position écartée à la position serrée.

Pour le transfert de certains liquides entre un récipient contenant ce liquide et un réservoir à remplir de ce liquide, il peut être nécessaire d'assurer une connexion étanche entre le récipient et le réservoir afin d'éviter toute fuite de liquide en dehors du réservoir au cours du transfert. C'est le cas notamment pour des liquides toxiques ou dangereux, des liquides ne devant pas être exposés à l'air ou au milieu ambiant afin d'éviter le risque d'une pollution des liquides par ce milieu ou une pollution du milieu par ces liquides, des liquides produisant des émanations désagréables ou plus simplement lorsque le transfert de liquide doit se faire à une pression autre que la pression atmosphérique ou pour assurer un transfert de liquide sans perte et/ou de façon simple, rapide et/ou ergonomique.

En outre, cette connexion étanche doit généralement être prévue pour ne pas se défaire de façon involontaire, ce qui pourrait entraîner une fuite de liquide.

Pour assurer un transfert étanche, on prévoit un embout de récipient connecté au récipient et apte à coopérer avec l'embout du réservoir de façon à assurer une connexion étanche entre le volume interne du récipient et le volume interne du réservoir.

Le document WO2017/202958 décrit un embout de récipient de liquide du type précité, dans lequel, pour entraîner le déplacement du dispositif de fermeture de la position fermée à la position ouverte, le dispositif de commande doit être actionné d'abord dans une position active, dans laquelle le dispositif de commande exerce une force de serrage sur le dispositif de serrage dans sa position serrée, le déplacement du dispositif de commande de la position rétractée à la position active entraînant le déplacement du dispositif de serrage de la position écartée à la position serrée, puis dans une position d'écoulement au-delà de la position active par rapport à la position rétractée. Dans la position d'écoulement, l'embout laisse passer le liquide du récipient vers le réservoir.

Un des buts de l'invention est de proposer un embout de récipient de liquide plus simple à fabriquer et à prendre en main pour un utilisateur, tout en garantissant une étanchéité lors de la manipulation et du stockage du récipient de liquide comprenant un tel embout.

À cet effet, la présente invention a pour objet un embout de récipient de liquide du type précité, dans lequel le dispositif de commande et le dispositif de fermeture sont réalisés d'une seule pièce, le déplacement du dispositif de commande dans la position d'écoulement entraînant le déplacement du dispositif de fermeture de la position fermée à la position ouverte.

La réalisation du dispositif de fermeture et du dispositif de commande d'une seule pièce permet de simplifier le montage de l'embout et d'opérer la connexion de l'embout de récipient sur l'embout de réservoir et le passage dans une position d'écoulement en un geste unique. Il n'y a donc pas de position intermédiaire entre la position rétractée du dispositif de commande et la position d'écoulement, ce qui permet également de réduire la course du dispositif de commande de la position rétractée à la position d'écoulement.

Selon d'autres caractéristiques de l'embout de récipient selon l'invention, prises isolément ou selon toute combinaison techniquement possible :
- l'embout de récipient comprend une paroi s'étendant entre l'entrée et la sortie et définissant une partie d'un volume d'écoulement du liquide, le dispositif de fermeture comprend un corps mobile pourvu d'un corps d'obturation, le corps mobile comprend une paroi s'étendant entre l'entrée et la sortie et disjointe du corps d'obturation, et le corps mobile est mobile par rapport à ladite paroi de l'embout entre la position fermée dans laquelle le corps d'obturation est en contact étanche avec la paroi de l'embout et la position ouverte, dans laquelle le corps d'obturation est dégagé de la paroi de l'embout de sorte que le liquide peut s'écouler au travers de la sortie ;
- le corps d'obturation est relié à la paroi du corps mobile par une jupe d'étanchéité coopérant de façon étanche avec la paroi du corps mobile ;
- l'embout de récipient comprend une conduite d'aération s'étendant au travers du volume d'écoulement et isolée de celui-ci, ladite conduite comprenant au moins une entrée d'air centrale solidaire du corps d'obturation de sorte que l'entrée d'air est fermée dans la position fermée du dispositif de fermeture et est en communication avec l'extérieur en position ouverte du dispositif de fermeture ;
- l'embout de récipient comprend au moins deux bras s'étendant radialement autour de la paroi de l'embout, le dispositif de fermeture comprenant un corps mobile et au moins une zone de connexion reliant le corps mobile au dispositif de commande en passant par une ouverture pratiquée dans chaque bras, dans lequel chaque bras comprend en outre au moins une surface de butée en amont de l'ouverture sur laquelle la zone de connexion vient en butée en position fermée ;
- le dispositif de serrage comprend au moins deux bras de serrage, les bras de serrage présentant sensiblement une forme de griffe ;
- le dispositif de commande comprend en outre un dispositif de verrouillage du dispositif de commande en position d'écoulement, le dispositif de verrouillage étant mobile entre une position déverrouillée, lorsque le dispositif de commande se déplace entre la position rétractée et la position d'écoulement, et une position verrouillée, lorsque le dispositif de commande atteint la position d'écoulement, le dispositif de verrouillage étant agencé pour maintenir le dispositif de commande dans la position d'écoulement lorsqu'il est dans la position de verrouillage, le passage du dispositif de verrouillage de la position déverrouillée à la position verrouillée provoquant un déclic sonore ;
- l'embout de récipient comprend en outre un dispositif de blocage, mobile entre une position de blocage, dans laquelle le dispositif de blocage empêche le déplacement du dispositif de fermeture de la position fermée à la position ouverte, et une position de déblocage, dans laquelle le dispositif de fermeture peut se déplacer entre les positions ouverte et fermée.

L'invention concerne également un ensemble de connexion d'un récipient de liquide à un réservoir de liquide, comprenant un embout de récipient selon l'invention et un embout de réservoir comprenant une paroi externe dont au moins un tronçon est lisse, l'embout de récipient étant fixé de façon étanche sur l'embout de réservoir par la coopération du dispositif de serrage avec le tronçon lisse de la paroi externe lorsque ledit dispositif de serrage est en position serrée.

L'invention concerne également un récipient de liquide définissant un volume interne apte à contenir un liquide et comprenant une ouverture de sortie par laquelle le liquide peut s'écouler hors du volume interne, ledit récipient comprenant un embout de récipient selon l'invention dont l'entrée est en communication fluidique avec le volume interne du récipient par l'intermédiaire de l'ouverture de sortie.

Selon une autre caractéristique, le récipient de liquide comprend un goulot définissant l'ouverture de sortie, l'embout de récipient étant fixé directement sur ledit goulot ou étant relié audit goulot par l'intermédiaire d'un tuyau flexible.

D'autres aspects et avantages de l'invention apparaîtront à la lecture de la description qui suit, donnée à titre d'exemple et faite en référence aux dessins annexés, dans lesquels :
**[****Fig 1****]** - la Fig. 1 est une représentation schématique d'un ensemble de connexion comprenant un embout de récipient selon l'invention ;
**[****Fig 2****]** - la Fig. 2 est une représentation schématique en perspective éclatée de l'embout de récipient de la Fig.1 ;
**[****Fig 3****]** - la Fig. 3 est une représentation schématique en coupe selon l'axe III-III de l'ensemble de connexion de la Fig. 1, le dispositif de serrage étant en position écartée ;
**[****Fig 4****]** - la Fig. 4 est une représentation schématique en coupe selon l'axe III-III de l'ensemble de connexion de la Fig. 1, le dispositif de serrage étant en position serrée et le dispositif de fermeture étant en position ouverte ;
**[****Fig 5****]** - la Fig. 5 une représentation schématique en coupe selon le plan V-V de l'embout de récipient de la Fig. 2, le dispositif de serrage étant en position serrée et le dispositif de fermeture étant en position ouverte ;
**[****Fig 6****]** - la Fig.6 une représentation schématique en coupe d'un embout de récipient comprenant un dispositif de blocage en position de blocage selon un mode de réalisation de l'invention ;
**[****Fig 7****]** - la Fig. 7 est une représentation schématique en coupe d'un tuyau flexible pouvant être utilisé avec l'embout de récipient de l'invention ;
**[****Fig 8****]** - la Fig. 8 est une représentation schématique en coupe d'un ensemble de connexion selon un autre mode de réalisation de l'invention, le dispositif de serrage étant en position écartée ;
**[****Fig 9****]** - la Fig. 9 est une représentation schématique en coupe d'un ensemble de connexion selon le mode de réalisation de la Fig.8, le dispositif de serrage étant en position serrée et le dispositif de fermeture étant en position ouverte.

Dans la description, les termes « amont » et « aval » sont définis par rapport à la direction d'écoulement du liquide d'un récipient à un réservoir selon un axe d'écoulement. Le terme « radial » est défini selon une direction ou un plan sensiblement perpendiculaire à l'axe d'écoulement Le terme « extérieur » est défini par ce qui s'étend en dehors du volume défini par l'embout de récipient.

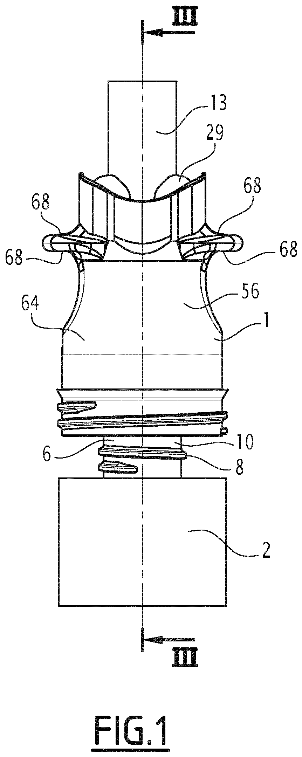

En référence à la Fig. 1, un ensemble de connexion d'un récipient à un réservoir est décrit. Par récipient et réservoir (non représentés), on entend tout type de contenant de liquide définissant un volume interne apte à contenir un liquide et comprenant une ouverture d'écoulement du liquide en communication fluidique avec le volume interne. Plus particulièrement l'invention concerne un ensemble de connexions permettant de transvaser un liquide du récipient vers le réservoir. Ainsi, le récipient est par exemple formé par un bidon, de contenance quelconque, et le réservoir est par exemple formé par un réservoir de véhicule. L'invention est particulièrement adaptée pour le transvasement d'une solution aqueuse d'urée d'un bidon à un réservoir de véhicule automobile. Cependant, le récipient pourrait également être formé par le réservoir d'une pompe ou autre et le réservoir pourrait être formé par un autre bidon ou autre.

L'ensemble de connexion comprend un embout de récipient 1, destiné à être fixé au récipient de sorte à être en communication fluidique avec l'ouverture d'écoulement du liquide du récipient, et un embout de réservoir 2, destiné à être fixé au réservoir de sorte à être en communication fluidique avec l'ouverture d'écoulement du liquide du réservoir.

L'embout de réservoir 2 est, de préférence, venu de matière avec le réservoir et comprend une paroi interne 4, formant un canal d'écoulement de liquide en communication fluidique avec l'ouverture d'écoulement, et une paroi externe 6, formant une surface de réception de l'embout de récipient 1 ou d'un bouchon de fermeture. En d'autres termes, l'embout de réservoir 2 est de préférence réalisé d'un seul tenant avec le réservoir.

La paroi interne 4 et la paroi externe 6 sont de préférence formées par des cylindres de révolution coaxiaux et s'étendent selon un axe d'écoulement A. La paroi externe 6 comprend de préférence un filetage 8 destiné à permettre la fixation d'un bouchon (non représenté). La paroi externe 6 comprend en outre un tronçon lisse 10 s'étendant entre le filetage 8 et l'extrémité libre 12 de l'embout de réservoir 2. Par tronçon lisse 10, on entend que la paroi externe 6 est de diamètre sensiblement constant dans le tronçon lisse 10.

Par sensiblement constant, il est entendu que les variations du diamètre de la paroi externe dans le tronçon lisse sont inférieures à 5 %.

De préférence, la longueur du tronçon lisse 10, mesurée selon l'axe d'écoulement A, est comprise entre 5 mm et 10 mm, de préférence entre 6 mm et 9 mm et plus préférentiellement entre 7 mm et 8 mm. Selon un exemple particulier, la longueur du tronçon lisse 10 mesurée selon l'axe d'écoulement A est de 7,8 mm.

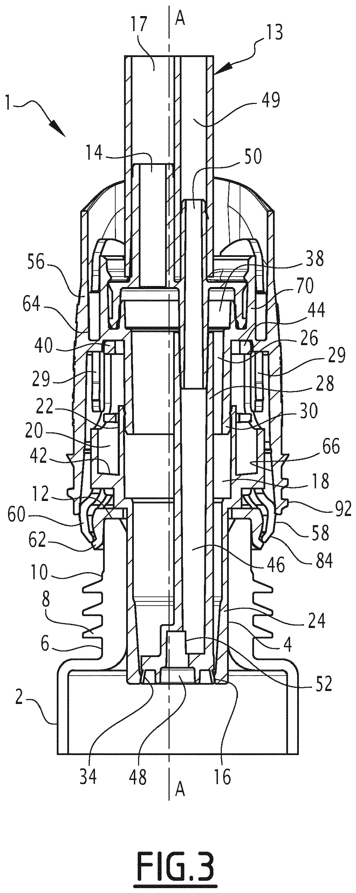

L'embout de récipient 1 est destiné à être relié à l'ouverture d'écoulement du récipient. Avantageusement, l'embout de récipient n'est pas venu de matière avec le récipient mais est fixé sur celui-ci de façon à pouvoir être retiré. Selon un mode de réalisation adapté pour les bidons de petite contenance, l'embout de récipient 1 est par exemple vissé sur l'ouverture d'écoulement. En variante, par exemple pour des bidons de plus grande contenance, l'embout de récipient 1 est connecté à un tuyau flexible 13 lui-même relié à l'ouverture d'écoulement du liquide, comme représenté sur les Fig. 1 et 3 par exemple. L'embout de récipient 1 est adapté en conséquence, par exemple en étant pourvu d'un filetage pour le visser sur un récipient ou en comprenant une embouchure de réception du tuyau flexible de façon étanche.

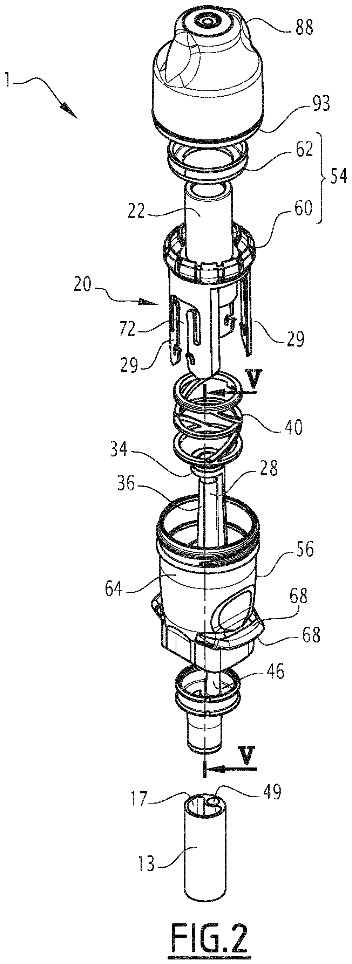

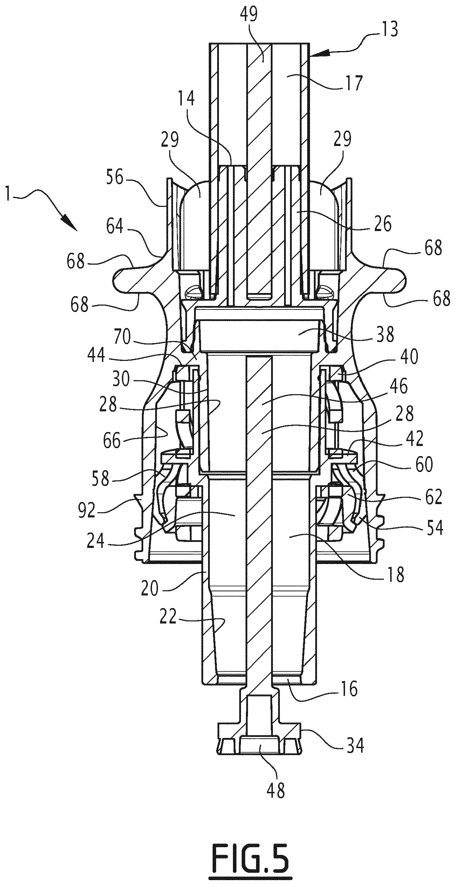

Comme représenté sur les Figs. 2 à 6, 8 et 9, l'embout de récipient comprend une entrée 14 et une sortie 16 en communication fluidique avec l'entrée 14. L'entrée 14 est en communication fluidique avec la sortie d'écoulement du récipient de sorte que le liquide contenu dans le récipient peut s'écouler jusqu'à la sortie 16 en passant par l'entrée 14. Dans le cas d'une connexion de l'embout de récipient 1 avec un tuyau flexible 13, l'entrée 14 est reliée à une conduite d'écoulement de liquide 17 prévue dans le tuyau flexible 13, comme représenté sur les Figs. 2 à 9. L'entrée 14 et la sortie 16 sont reliées l'une à l'autre par un volume d'écoulement 18 étanche, c'est-à-dire qu'un liquide disposé dans le volume d'écoulement ne peut en sortir que par l'entrée 14 ou la sortie 16. Lorsque l'embout de récipient 1 est connecté à l'embout de réservoir 2 comme cela sera décrit ultérieurement, le volume d'écoulement 18, l'entrée 14 et la sortie 16 s'étendent sensiblement selon l'axe d'écoulement A.

L'embout de récipient 1 comprend un corps fixe 20 comprenant une paroi 22. Au voisinage de la sortie 16, le volume d'écoulement 18 est délimité par la partie aval 24 de la paroi 22 du corps fixe dont le diamètre externe est inférieur ou égal au diamètre de la paroi interne 4 de l'embout de réservoir de sorte que la partie aval 24 de la paroi 22 peut être introduite dans l'embout de réservoir 2, comme représenté sur les Figs. 3, 4, 8 et 9. Avantageusement, la partie aval 24 de la paroi 22 est sensiblement complémentaire de la paroi interne 4 de l'embout de réservoir 2 de sorte que le volume d'écoulement 18 est le plus grand possible au voisinage de la sortie 16, qui est définie par l'orifice s'étendant à l'extrémité aval de la partie aval 24 de la paroi 22.

En amont de la partie aval 24, le diamètre de la paroi 22 s'agrandit de sorte que le corps fixe 20 peut loger le corps mobile 26 d'un dispositif de fermeture 28 permettant de contrôler l'écoulement de liquide au travers de la sortie 16. Le corps fixe 20 comprend au moins deux bras 29 s'étendant radialement autour de la paroi 22 en amont de la partie aval 24. Les bras 29 s'étendent de l'aval vers l'amont au-delà de la paroi 22.

La paroi 30 du corps mobile 26 du dispositif de fermeture 28 définit le volume d'écoulement 18 en amont de la partie aval 24 de la paroi 22 du corps fixe 20. L'entrée 14 de l'embout de récipient 1 est définie par l'orifice s'étendant à l'extrémité amont de la paroi 30 du corps mobile 26. L'extrémité aval de la paroi 30 du corps mobile 26 est en communication fluidique avec l'extrémité amont de la partie aval 24 de la paroi 22 du corps fixe 20 de sorte à assurer la continuité du volume d'écoulement 18. La surface externe de la paroi 30 du corps mobile 26 est en contact étanche avec la surface intérieure de l'amont de la paroi 22 du corps fixe 20 de sorte à assurer l'étanchéité du volume d'écoulement 18. Pour ce faire, le diamètre externe de la paroi 30 du corps mobile 26 est sensiblement égal au diamètre intérieur de la partie amont de la paroi 22 du corps fixe 20, au moins au voisinage de l'extrémité aval de la paroi 30 du corps mobile 26.

Le dispositif de fermeture 28 comprend en outre un corps d'obturation 34 relié à la paroi 30 du corps mobile 26 par une jupe d'étanchéité 36 s'étendant entre le corps d'obturation 34 et l'extrémité aval de la paroi 30 du corps mobile 26, comme représenté sur la Fig.2. La jupe 36 est évasée de l'aval vers l'amont et s'étend de façon continue autour du dispositif de fermeture 28 du côté opposé au volume d'écoulement 18. La jupe 36 est dimensionnée pour limiter la perturbation de l'écoulement de liquide dans le volume d'écoulement 18. Le corps d'obturation 34 est sensiblement complémentaire de la partie aval 24 de la paroi 22 du corps fixe 20 de sorte que le corps d'obturation 34 peut fermer la partie aval 24 et empêcher l'écoulement au travers de la sortie 16, comme représenté sur les Figs. 3, 6 et 8. À cet effet, le corps d'obturation 34 présente un diamètre externe sensiblement égal au diamètre intérieur de la partie aval 24 de la paroi 22 du corps fixe 20.

Le corps d'obturation 34 et le corps mobile 36 sont réalisés d'une seule pièce. Par réalisé d'une seule pièce, on entend que les corps d'obturation 34 et mobile 36 sont venus de matière et que le déplacement de l'un entraîne un même déplacement de l'autre.

La surface externe de la jupe 36 est en contact étanche avec la surface intérieure de la partie aval de la paroi 30 du corps mobile 26 de sorte que la jupe 36 peut empêcher l'écoulement entre la paroi 22 du corps fixe 20 et la paroi 30 du corps mobile 26 dans la partie opposée au volume d'écoulement 18 comme représenté sur les Figs. 3, 6 et 8. À cet effet, la jupe 36 présente dans la partie aval de la paroi 30 du corps mobile 26 un diamètre externe sensiblement égal au diamètre intérieur de la partie aval de la paroi 30 du corps mobile 26.

Une telle disposition permet de se dispenser de l'usage d'un joint annulaire s'étendant entre la paroi 30 du corps mobile 26 et la partie aval 24 de la paroi 22 du corps fixe 20 et d'un joint annulaire s'étendant autour du corps d'obturation 34 afin d'assurer un contact étanche entre le corps d'obturation 34 et la partie aval 24 en position fermée du dispositif de fermeture 28, comme cela va à présent être décrit.

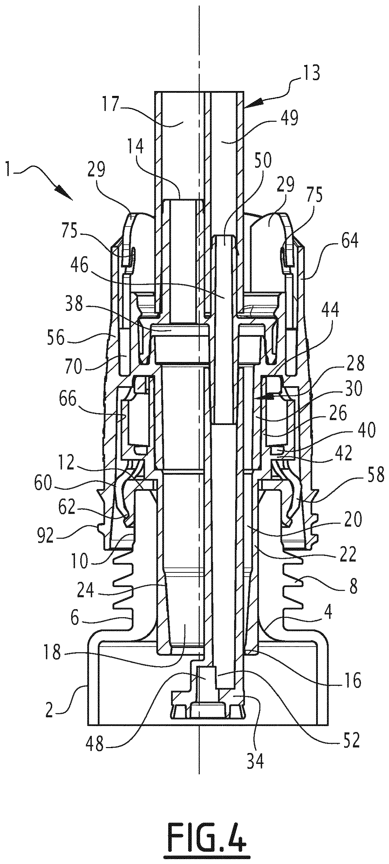

Le corps mobile 26 est mobile par rapport au corps fixe 20 entre une position fermée (Figs. 3, 6 et 8) et une position ouverte (Figs. 4, 5 et 9). Dans la position fermée, la position du corps mobile 26 est telle que le corps d'obturation 34 s'étend dans la partie aval 24 de la paroi 22 du corps fixe 20 et est en contact étanche avec celle-ci au voisinage de la sortie 16 de sorte que l'écoulement du liquide par la sortie 16 n'est pas possible. En position ouverte, le corps mobile 26 est déplacé dans la direction aval selon l'axe d'écoulement A de sorte que le corps d'obturation 34 est déplacé hors de la partie aval 24 de la paroi 22 du corps fixe 20, ce qui libère l'écoulement de liquide au travers de la sortie 16. Ainsi, le dispositif de fermeture 28 est mobile en translation selon l'axe d'écoulement A entre la position fermée et la position ouverte par rapport au corps fixe 20.

Avantageusement, le corps mobile 26 comprend un clapet anti-retour 38 permettant d'empêcher le retour de liquide dans le récipient lors du transvasement. Le clapet anti-retour 38 est par exemple un clapet à battant, un clapet ou tout autre type de clapet envisageable et compatible avec l'embout 1.

Selon un mode de réalisation représenté sur les figures, un élément de contrainte 40 contraint le corps mobile 26 vers la position fermée. L'élément de contrainte 40, par exemple un ressort, est de préférence agencé autour de l'amont de la paroi 22 du corps fixe 20 dans la position ouverte et autour de la paroi 30 du corps mobile 26 et de l'amont de la paroi 22 du corps fixe 20 dans la position fermée et est en appui contre une surface d'appui radiale 42 du corps fixe 20 d'une part et contre une surface d'appui radiale 44 s'étendant radialement en saillie de la paroi 30 du corps mobile 26 d'autre part. L'élément de contrainte 40 est comprimé lorsque le corps mobile 26 est en position ouverte de sorte à exercer une force de rappel vers la position fermée sur le corps mobile 26.

L'actionnement du dispositif de fermeture 28 entre la position fermée et la position ouverte sera décrit ultérieurement.

Une conduite d'aération 46 s'étend au travers du volume d'écoulement 18 selon l'axe d'écoulement A. La conduite d'aération 46 comprend au moins une entrée 48 solidaire du corps d'obturation 34 et une sortie 50 destinée à être reliée à une conduite d'aération 49 prévue dans le récipient ou dans le tuyau flexible 13. L'entrée 48 est mobile avec le corps d'obturation 34 entre la position fermée, dans laquelle l'entrée 48 est fermée par un élément de fermeture, et la position ouverte, dans laquelle l'entrée 48 est déplacée hors de la partie aval 24 de sorte à être en communication fluidique avec le volume interne du réservoir. De façon connue, la conduite d'aération 46 permet de mettre en communication fluidique le volume d'air contenu dans le réservoir avant son remplissage avec un volume d'air s'étendant au-dessus du niveau de liquide dans le récipient afin de favoriser l'écoulement de liquide entre le récipient et le réservoir. En outre, l'entrée d'air 48 fait office de dispositif anti-débordement en arrêtant ou en ralentissant l'écoulement de liquide lorsque l'entrée 48 est plongée dans le liquide présent dans le réservoir. La conduite d'aération 46 est isolée du volume d'écoulement 18 de sorte que le liquide ne pénètre pas dans cette conduite.

Selon le mode de réalisation représenté sur les Figs. 2 à 6, 8 et 9, la conduite d'aération 46 comprend au moins une entrée d'air 48 centrale. De préférence, l'entrée d'air 48 centrale est unique. Un tel agencement améliore la circulation de l'air dans la conduite d'aération 46 et l'écoulement de liquide dans le volume d'écoulement 18, et permet un temps de remplissage plus court.

La conduite d'aération 48 est réalisée d'une seule pièce avec le corps mobile 26 et avec le corps d'obturation 34. Cela permet de simplifier la production de l'embout et son utilisation.

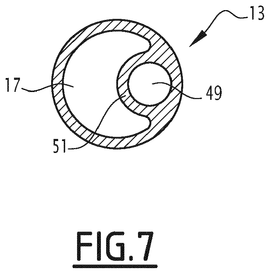

Selon ce mode de réalisation, la conduite d'aération 46 s'étend sensiblement au centre du volume d'écoulement 18 dans une zone aval de la partie aval 24 du corps fixe 20. Dans cette zone, la conduite d'aération 46 forme un coude 52 de sorte à s'étendre au voisinage de la paroi 30 du corps mobile 26 jusqu'à l'entrée 14. Un tel mode de réalisation permet de relier la conduite d'aération 46 à une conduite d'aération 49 prévue dans le tuyau flexible 13 co-extrudée avec le tuyau flexible 13, comme représenté sur la Fig. 7. Selon ce mode de réalisation, le tuyau flexible 13 comprend une paroi interne 51 séparant le canal d'écoulement de liquide 17 et la conduite d'aération 49, cette paroi interne 51 pouvant, dans un mode de réalisation, être réalisée d'une seule pièce avec le reste du tuyau flexible 13 par extrusion. Ainsi, la réalisation du tuyau flexible est simplifiée car elle ne nécessite pas la réalisation d'un tuyau flexible et d'une conduite d'aération séparée puis l'introduction de la conduite d'aération dans le tuyau flexible.

L'embout de récipient 1 comprend en outre un dispositif de serrage 54, permettant de fixer de façon étanche l'embout de récipient 1 sur l'embout de réservoir 2 et un dispositif de commande 56 du dispositif de serrage 54.

Lorsque l'embout de récipient 1 est fixé sur l'embout de réservoir 2, le dispositif de serrage 54 est agencé pour coopérer de façon étanche avec le tronçon lisse 10 de la paroi externe 6 de l'embout de réservoir 2 afin d'assurer une connexion étanche entre l'embout de récipient 1 et l'embout de réservoir 2.

Le dispositif de serrage 54 s'étend autour du corps fixe 20 en amont de la partie aval 24 du corps fixe 20 au voisinage de l'extrémité amont de la partie aval 24. Le dispositif de serrage 54 comprend au moins deux bras de serrage 58, de préférence opposés, mobiles entre une position écartée (Figs. 3, 6 et 8) et une position serrée (Fig. 4, 5 et 9).

Dans la position écartée, la distance séparant les bras de serrage 58 et la surface externe de la paroi 22 du corps fixe 20 est telle que l'extrémité libre 12 et au moins une partie du tronçon lisse 10 de l'embout de réservoir 2 peuvent être introduites entre les bras de serrage 58 et la surface externe de la paroi du corps fixe 20. Dans la position serrée, les bras de serrage 58 sont rapprochés l'un de l'autre de sorte à être en appui au moins ponctuel contre le tronçon lisse 10 et à exercer une force de serrage sur le tronçon lisse 10. Le mouvement entre la position écartée et la position serrée est un mouvement radial de sorte que la force de serrage est exercée selon la direction radiale. Une telle force de serrage permet d'assurer une fixation robuste et étanche entre l'embout de récipient 1 et l'embout de réservoir 2.

Les bras de serrage 58 présentent sensiblement une forme de griffe, c'est-à-dire que l'extrémité amont et l'extrémité aval de chaque bras de serrage 58 sont plus proches de la paroi 22 du corps fixe 20 qu'une partie centrale du bras de serrage 58. Le mouvement entre la position écartée et la position serrée se fait en rapprochant les extrémités aval des bras de serrage 58 de la paroi externe 6 de l'embout de réservoir 2, c'est-à-dire en rapprochant les extrémités aval des bras de serrage 58 l'une de l'autre selon une direction radiale.

Selon le mode de réalisation représenté sur les figures, chaque bras de serrage 58 comprend une partie externe 60 venue de matière avec la paroi 22 du corps fixe 20 et une partie interne 62 formée en un matériau résilient, de préférence du type élastomère. La partie interne 62 est appliquée contre la partie externe 60 et est disposée entre la partie externe 60 et la paroi 22 du corps fixe 20. Ainsi, la partie interne 62 forme la surface interne du bras de serrage 58 qui est appliquée contre le tronçon lisse 10 de la paroi externe 6 de l'embout de réservoir 2. Un tel mode de réalisation permet d'assurer un contact étanche entre le dispositif de serrage 54 et l'embout de réservoir 2 dans la position serrée. En outre, la partie interne 62 est agencée pour prendre appui sur l'extrémité libre 12 de l'embout de réservoir afin d'assurer une étanchéité complète entre l'embout de récipient 1 et l'embout de réservoir 2. La partie interne 62 est par exemple agencée pour assurer un contact étanche annulaire sur l'ensemble de l'extrémité libre 12 de l'embout de réservoir 2.

La partie externe 60 forme, quant à elle, la surface externe du bras de serrage 58 qui est destinée à coopérer avec le dispositif de commande 56 pour déplacer le dispositif de serrage 54 entre la position écartée et la position serrée, comme cela sera décrit ultérieurement.

Chaque bras de serrage 58 est agencé de telle sorte à se trouver en position écartée lorsqu'aucune contrainte n'est exercée sur le bras de serrage 58. Ainsi, chaque bras de serrage est sensiblement élastique selon la direction radiale.

Selon l'exemple représenté, qui est un mode préféré de réalisation, le dispositif de serrage 54 comprend dix bras répartis autour du corps fixe 20. En variante, le dispositif de serrage 54 pourrait comprendre un nombre de bras différent, inférieur ou supérieur à dix et au moins égal à deux. Selon une autre variante, le dispositif de serrage 54 est formé par une jupe évasée de l'amont vers l'aval s'étendant de façon continue autour du corps fixe 20. Un tel mode de réalisation permet d'obtenir un contact continu annulaire entre le dispositif de serrage 54 et le tronçon lisse 10 dans la position serrée. On obtient ainsi un serrage plus robuste et une étanchéité améliorée.

Le dispositif de commande 56 est agencé pour déplacer le dispositif de serrage 54 entre la position écartée et la position serrée et pour exercer une force de serrage sur le dispositif de serrage 54 en position serrée. Pour ce faire, le dispositif de commande 56 est mobile entre une position rétractée (Figs. 3, 6 et 8), dans laquelle le dispositif de commande 56 n'exerce pas de force sur le dispositif de serrage 54, et une position d'écoulement (Figs. 4, 5 et 9), dans laquelle le dispositif de commande 56 a déplacé le dispositif de serrage 54 dans la position serrée et exerce une force de serrage sur le dispositif de serrage 54.

À cet effet, le dispositif de commande 56 comprend un manchon 64, ou coulisseau 64, disposé autour du corps fixe 20 et mobile en translation selon l'axe d'écoulement A par rapport au corps fixe 20 entre une position rétractée dans laquelle le manchon 64 est écarté du dispositif de serrage 54 et une position d'écoulement dans laquelle le manchon 64 exerce une force d'appui radiale sur le dispositif de serrage 54 afin de placer et de maintenir celui-ci dans la position serrée.

Plus particulièrement, le manchon 64 comprend une surface interne 66 apte à coopérer avec la surface externe formée par la partie externe 60 des bras de serrage 58 pour déplacer radialement les bras de serrage 58 vers la position serrée lorsque le manchon 64 coulisse vers l'aval selon la direction de l'axe d'écoulement A. Ainsi, le mouvement en translation selon la direction de l'axe d'écoulement A du manchon 64 entre la position rétractée et la position d'écoulement est transformé en mouvement radial des bras de serrage entre la position écartée et la position serrée.

Le manchon 64 est par exemple pourvu de surfaces d'actionnement 68 sur sa paroi externe, permettant à l'utilisateur d'actionner le dispositif de commande 56 entre la position rétractée et la position d'écoulement. Les surfaces d'actionnement 68 forment par exemple des oreilles sur la surface externe du manchon 64 et permettent à l'utilisateur de saisir le manchon pour le déplacer dans la direction amont-aval ou dans la direction aval-amont en positionnant ses doigts de part et d'autre du manchon 64 pour saisir les oreilles formées par les surfaces d'actionnement 68.

Le dispositif de commande 56 permet également d'actionner le dispositif de fermeture 28 entre les positions fermée et ouverte. Pour ce faire, le dispositif de fermeture 28 et le dispositif de commande 56 sont réalisés d'une seule pièce.

Le dispositif de fermeture 28 comprend au moins une zone de connexion 70 reliant le corps mobile 26 au manchon 64 en passant par une ouverture 72 pratiquée dans les bras 29 du corps fixe 20, comme représenté sur les Figs. 3 à 6, 8 et 9.

Pour passer de la position ouverte à la position fermée ou le contraire, le corps mobile 26 ainsi que le manchon 64 coulissent d'un seul tenant en translation de l'aval vers l'amont ou de l'amont vers l'aval, et la zone de connexion 70 coulisse le long de l'ouverture 72 pratiquée dans les bras 29 du corps fixe 20.

Chaque bras 29 comprend en outre au moins une surface de butée 75 en amont de l'ouverture 72 sur laquelle la zone de connexion 70 vient en butée en position fermée.

Selon le mode de réalisation préféré, chaque bras comporte deux surfaces de butée 75.

La surface de butée 75 permet d'empêcher l'arrachement du manchon 64 en cas d'une force de traction trop importante de l'utilisateur lorsqu'il retire l'embout 1 d'un réservoir.

Le dispositif de commande 56 est mobile vers la position d'écoulement (Fig. 4, 5 et 9) de façon à déplacer le dispositif de fermeture 28 dans la position ouverte. En d'autres termes, le déplacement du dispositif de commande 56 vers la position d'écoulement entraîne le déplacement du dispositif de fermeture 28 vers la position ouverte en un seul mouvement.

Dans la position rétractée, le dispositif de commande 56 n'interagit ni avec le dispositif de serrage 54, ni avec le dispositif de fermeture 28.

Dans la position d'écoulement, le dispositif de commande 56 interagit avec le dispositif de serrage 54, pour le maintenir en position serrée, et avec le dispositif de fermeture 28 pour le déplacer dans la position ouverte. Cela signifie que l'embout de récipient 1 est agencé de telle façon que le dispositif de fermeture 28 ne peut être placé en position ouverte que lorsque l'embout de récipient 1 est fixé de façon étanche sur l'embout de réservoir 2. On évite ainsi que l'écoulement de liquide puisse avoir lieu alors que l'embout de récipient 1 n'est pas fixé sur l'embout de réservoir 2.

Avantageusement, le dispositif de commande 56 comprend à son extrémité amont au moins un détrompeur destiné à empêcher un utilisateur de connecter le tuyau flexible 13 dans une mauvaise position.

Le dispositif de commande 56 comprend en outre un dispositif de verrouillage du dispositif de commande 56 en position d'écoulement afin que l'utilisateur n'ait pas à maintenir une force d'appui sur le dispositif de commande 56 pendant l'opération de transvasement du liquide entre le récipient et le réservoir. Le dispositif de verrouillage comprend par exemple un épaulement 82 s'étendant radialement en saillie de la surface interne 66 du manchon 64 au voisinage de l'extrémité aval du manchon 64 et une surface de maintien 84 s'étendant radialement de l'extrémité aval des bras de serrage 58. Le dimensionnement du manchon 64 et des bras de serrage 58 est telle que, lorsque le dispositif de commande 56 atteint la position d'écoulement, l'épaulement 82 coopère avec les surfaces de maintien 84 des bras de serrage 58 afin de bloquer le mouvement relatif du dispositif de commande 56 par rapport au corps fixe 20 et assurer ainsi le maintien du dispositif de fermeture 28 en position ouverte. Ainsi, le dispositif de verrouillage est mobile entre une position déverrouillée, lorsque le dispositif de commande 56 se déplace entre la position rétractée et la position d'écoulement, et une position verrouillée, lorsque le dispositif de commande 56 atteint la position d'écoulement, le dispositif de verrouillage étant agencé pour maintenir le dispositif de commande 56 dans la position d'écoulement lorsqu'il est dans la position de verrouillage. Le dimensionnement est également tel que l'épaulement 82 peut se désengager des surfaces de maintien 84 lorsqu'un utilisateur tire sur le manchon 64 par les surfaces d'actionnement 68 dans la direction aval-amont afin de faire passer le dispositif de fermeture 28 dans la position fermée.

Un tel dispositif de verrouillage permet également d'informer l'utilisateur de la bonne connexion de l'embout de récipient sur l'embout de réservoir. En effet, le passage de l'épaulement 82 dans la position dans laquelle il coopère avec les surfaces de maintien provoque un déclic sonore. Ce déclic informe ainsi l'utilisateur que la connexion a été faite correctement.

En variante ou en complément, le dispositif de verrouillage permet d'informer l'utilisateur de la bonne connexion de l'embout par un type de signal différent, par exemple un signal visuel.

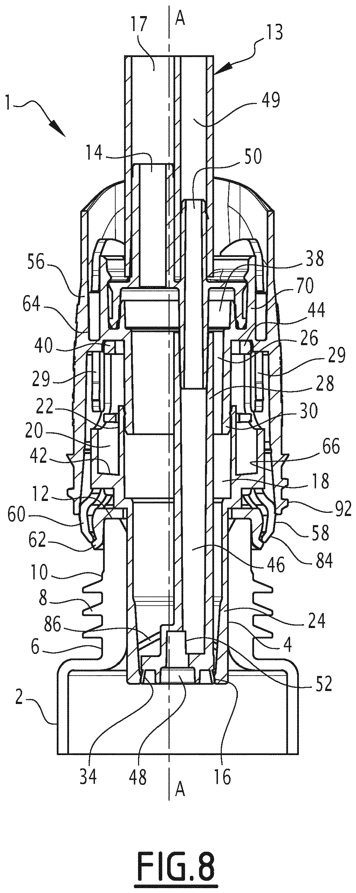

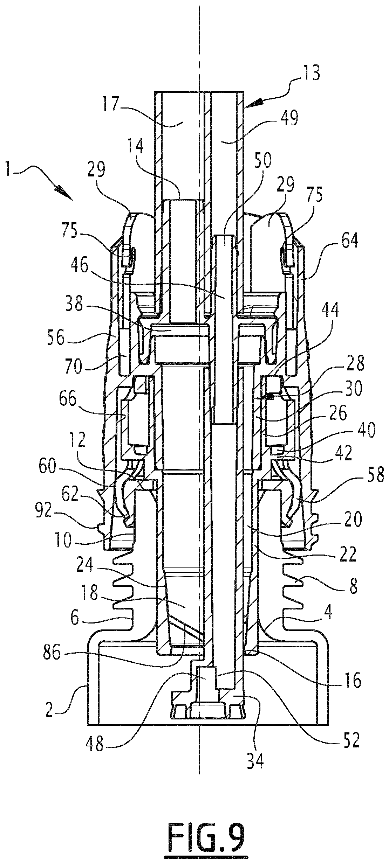

Selon un mode de réalisation, qui peut également être appliqué aux autres modes de réalisation, un élément bistable 86 est prévu entre le corps mobile 26 et le corps fixe 20 pour donner à l'utilisateur une information sur la position occupée par le dispositif de fermeture 28. Un tel élément bistable 86 est prévu pour avoir une position fermée stable dans la position fermée du dispositif de fermeture 28 (Fig. 8) et une position ouverte stable dans la position ouverte du dispositif de fermeture 28 (Fig. 9). Entre ses deux positions, l'élément bistable 86 tend à ramener le dispositif de fermeture 28 vers la position fermée lorsque l'élément bistable 86 est entre la position fermée stable et une position intermédiaire et tend à ramener le dispositif de fermeture 28 vers la position ouverte lorsque l'élément bistable 86 est entre la position intermédiaire et la position ouverte stable. Ainsi, l'utilisateur sent la force appliquée par l'élément bistable 86 sur le dispositif de fermeture 28 lorsque celui-ci se déplace vers la position ouverte ou vers la position fermée, ce qui lui donne une information sur la position du dispositif de fermeture 28. Un tel élément bistable est de préférence formé par une rondelle élastique s'étendant autour de la paroi externe du corps mobile 26 jusqu'à la paroi interne du corps fixe 20. Dans chacune des positions stables, la rondelle présente une forme tronconique. Plus particulièrement, en position fermée stable, la petite base de la rondelle, formée par l'extrémité de la rondelle s'étendant autour de la paroi externe du corps mobile 26, s'étend en amont de la grande base, formée par l'extrémité de la rondelle s'étendant sur la paroi interne du corps fixe 20. En position stable ouverte, la petite base de la rondelle s'étend en aval de la grande base de la rondelle. En position intermédiaire, la rondelle est sensiblement plane. En variante, plusieurs éléments bistables, par exemple formés par des lames élastiques, peuvent être prévus entre le corps mobile 26 et le corps fixe 20, ces lames étant inclinées par rapport à l'axe d'écoulement A dans les positions stables et étant sensiblement perpendiculaires à l'axe d'écoulement A dans la position intermédiaire.

L'embout de récipient 1 comprend en outre un dispositif de blocage visant à empêcher un déplacement involontaire du dispositif de fermeture 28 dans la position ouverte afin de prévenir toute fuite du récipient lorsque l'embout de récipient 1 n'est pas fixé sur l'embout de réservoir 2.

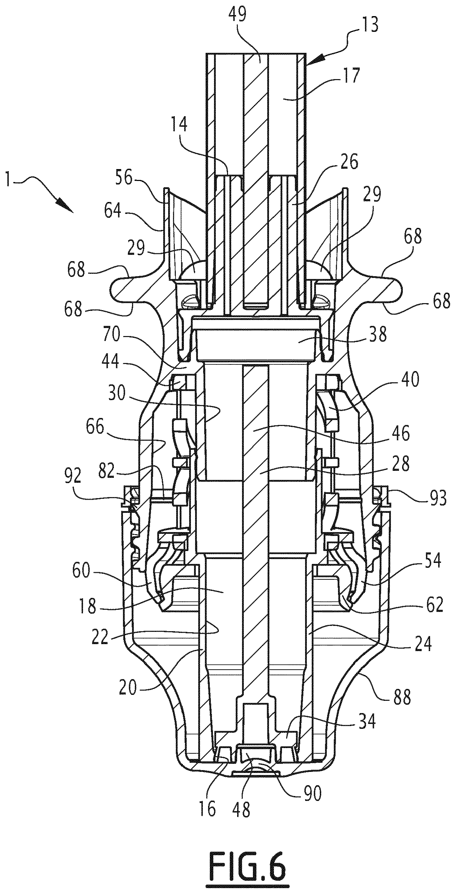

Selon le mode de réalisation représenté sur les figures, le dispositif de blocage est formé par un bouchon 88 (représenté sur les Fig. 2 et 6), qui est vissé sur le manchon 64 et qui comprend une surface de blocage 90 appliquée contre le corps d'obturation 34 lorsque le bouchon 88 est vissé sur le manchon 64. Ainsi, le dispositif de fermeture ne peut pas se déplacer vers la position ouverte lorsque le bouchon 88 est vissé sur le manchon 64. À cet effet, la surface externe du manchon 64 est alors pourvue d'un filetage 92 permettant de visser le bouchon 88 sur le manchon 64. Ainsi, l'utilisateur doit retirer le bouchon 88 de l'embout de récipient 1 pour pouvoir actionner le dispositif de fermeture 28. Selon ce mode de réalisation, le bouchon 88 présente une jupe d'étanchéité 93 à son extrémité amont. La jupe 93 permet de garantir l'étanchéité du récipient de liquide lors du stockage du récipient, à la fois en empêchant l'entrée d'air dans le manchon 64 et la sortie de liquide du récipient.

Selon ce mode de réalisation, une sangle reliant le bouchon au manchon (non représentée) peut être prévue pour retenir le bouchon 88 lorsqu'il est dévissé du manchon 64 afin d'éviter toute perte de ce bouchon. Selon ce mode de réalisation, le dispositif de blocage est en position de blocage lorsque le bouchon 88 est vissé sur le manchon 64 et en position de déblocage lorsque le bouchon 88 est retiré du manchon 64.

Le fonctionnement de l'ensemble de connexion va à présent être décrit.

Lorsque le réservoir doit être rempli du liquide contenu dans le récipient, l'utilisateur se sert de l'embout de récipient 1 pour le connecter à l'embout de réservoir 2 et ainsi permettre un transvasement du liquide du récipient vers le réservoir.

Dans le mode de réalisation où le dispositif de blocage est formé par un bouchon 88, l'utilisateur retire le bouchon 88 de sorte à dégager le corps d'obturation 34.

L'utilisateur emmanche ensuite l'embout de récipient 1 sur l'embout de réservoir 2 en tenant l'embout de récipient 1 par le manchon 64, par exemple par les surfaces d'actionnement 68. Lorsque l'embout de récipient 1 est emmanché sur l'embout de réservoir 2, le tronçon lisse 10 de l'embout de réservoir est introduit entre la surface externe de la partie aval 24 du corps fixe 20 et la surface interne des bras de serrage 58. Lorsque l'extrémité libre 12 de l'embout de réservoir 1 entre en contact avec la partie interne 62 des bras de serrage 58, un appui dans la direction amont-aval de l'utilisateur sur le manchon 64 entraîne un déplacement du dispositif de commande 56 de la position rétractée à la position d'écoulement, ce qui entraîne un déplacement du dispositif de serrage 54 de la position écartée à la position serrée. L'embout de récipient 1 est ainsi fixé de façon étanche et robuste sur l'embout de réservoir 2. On remarquera que la fixation de l'embout de récipient 1 se fait sur la partie lisse 10 de l'embout de réservoir par un mouvement de translation. Ainsi, l'utilisateur n'a pas à tourner l'embout de récipient par rapport à l'embout de réservoir, comme c'est le cas lorsque les embouts sont vissés ensemble, ce qui simplifie la fixation des embouts. De plus, l'embout de récipient ne nécessite pas d'être orienté de façon particulière par rapport à l'embout de réservoir pour que la connexion puisse se faire. En outre, l'embout de récipient 1 peut être fixé sur plusieurs types d'embouts de réservoir sans avoir à dimensionner un filetage de l'embout de récipient par rapport à un filetage d'embout de réservoir. Enfin, l'embout de réservoir 2 peut être simplifié puisqu'il n'a pas besoin de comprendre de moyens spécifiques de coopération avec l'embout de récipient pour assurer la fixation de l'ensemble de connexion.

Le déplacement du dispositif de commande 56 de la position active à la position d'écoulement entraîne également un déplacement du dispositif de fermeture 28 de la position fermée à la position ouverte. L'utilisateur est alors informé que la position d'écoulement est atteinte grâce au déclic provoqué par le dispositif de verrouillage et/ou grâce à l'élément bistable 86.

Ainsi, l'utilisateur peut, d'un seul actionnement amont-aval sur le manchon 64, emmancher l'embout de récipient 1 sur l'embout de réservoir 2, fixer de façon étanche l'embout de récipient 1 sur l'embout de réservoir 2 et enclencher le transvasement du liquide du récipient au réservoir en faisant passer le dispositif de fermeture 28 de la position fermée à la position ouverte. Cet actionnement peut être réalisé d'une seule main de l'utilisateur. Le passage de la position fermée à la position ouverte ne peut de plus se faire qu'une fois l'embout de récipient 1 fixé sur l'embout de réservoir 2. Ainsi, une mauvaise manipulation de l'embout de récipient 1 ne peut pas entraîner une fuite de liquide. Pour que le dispositif de fermeture 28 passe dans la position ouverte sans que l'embout de récipient 1 soit fixé sur l'embout de réservoir 2, il faudrait que l'utilisateur appuie lui-même sur la partie interne 62 des bras de serrage 58, ce qui est hautement improbable car cette partie est peu accessible depuis l'extérieur de l'embout de récipient 1 et que cette opération est particulièrement compliquée et ne peut arriver que de façon voulue. Ainsi, le risque d'une ouverture involontaire de l'embout de récipient 1 est éliminé.

Au cours du transvasement, l'utilisateur peut relâcher le dispositif de commande 56 qui reste dans sa position d'écoulement grâce au dispositif de verrouillage décrit précédemment, qui maintient le dispositif de commande 56 dans la position d'écoulement et l'élément de fermeture 28 dans la position ouverte à l'encontre de la force exercée par l'élément de contrainte 40. L'écoulement de liquide du récipient au réservoir se fait de façon rapide grâce aux conduites d'aération 46 et 49.

Lorsque le transvasement est terminé, celui-ci s'arrêtant par exemple automatiquement lorsque l'entrée d'air 48 est plongée dans le liquide dans le réservoir, l'utilisateur n'a qu'à tirer sur le dispositif de commande 56 dans la direction aval-amont, pour successivement placer le dispositif de fermeture 28 dans la position fermée, défaire la fixation de l'embout de récipient 1 de l'embout de réservoir 2 et retirer l'embout de récipient 1. Le dispositif de fermeture 28 retourne automatiquement dans sa position fermée sous l'effet de l'élément de contrainte 40 lorsque le dispositif de verrouillage est déverrouillé par le désengagement de l'épaulement 82 des surfaces de maintien 84.

L'élément de contrainte 40 permet également de sécuriser l'étanchéité de l'embout en cas de manipulation accidentelle.

On notera que le volume occupé par les parties de l'embout s'étendant dans le volume interne de l'embout de récipient 1 lorsque l'embout 1 est adapté sur l'embout de réservoir 2 est libéré lors de la déconnexion de l'embout de récipient 1 ce qui libère un volume dans l'embout de réservoir 2 et empêche ainsi tout débordement du liquide transféré en dehors du réservoir même lorsque celui-ci est complètement rempli.

L'utilisateur remet ensuite le bouchon 88, ce qui permet d'éviter toute fuite lorsque le récipient n'est pas utilisé, par exemple en cas de chocs contre le récipient ou lorsqu'un objet lourd est posé dessus. En effet, le bouchon 88 empêche tout déplacement du dispositif de fermeture 28 vers la position ouverte même lorsqu'une surpression est appliquée dans le récipient.

Le fonctionnement de l'embout de récipient 1 selon le mode de réalisation des Figs. 8 et 9 est sensiblement similaire.

Comme indiqué précédemment, l'embout de récipient 1 décrit ci-dessus peut être fixé sur divers récipients de contenance variable. Ces récipients sont de préférence du type bidon. Un tel récipient définit un volume interne apte à contenir le liquide et une ouverture de sortie par laquelle le liquide peut s'écouler hors du volume interne. L'ouverture de sortie est par exemple formée par l'extrémité libre d'un goulot.

Pour les récipients de faible contenance, de préférence 2 L ou moins, l'embout de récipient 1 peut être directement fixé sur le goulot du récipient, par exemple par vissage. Dans ce cas, l'entrée 14 de l'embout de réservoir 1 est en communication fluidique directe avec le volume interne du récipient par l'intermédiaire de l'ouverture de sortie. Pour les récipients de plus grandes contenances, de préférence 5 L, l'embout de récipient 1 est connecté au récipient par l'intermédiaire d'un tuyau flexible 13, tel que décrit précédemment. Cela permet de ne pas avoir à soulever le récipient lors de l'opération de transfert de liquide et éviter ainsi à l'utilisateur de porter des charges lourdes. Le tuyau 13 est par exemple clipsé d'une part sur l'embout de récipient 1 et vissé d'autre part sur le goulot du récipient. Dans ce cas, l'entrée 14 de l'embout de récipient est en communication fluidique avec le volume interne du récipient par l'intermédiaire du tuyau flexible 13.

L'embout de récipient 1 décrit ci-dessus présente également une construction plus simple que l'embout décrit dans WO2017/202958, ainsi qu'un actionnement plus simple en un seul mouvement du dispositif de commande pour faire passer le dispositif de fermeture de la position fermée à la position ouverte.

En outre, la course du dispositif de fermeture dans l'embout est réduite, ce qui permet une réduction de l'encombrement de l'embout.

## Revendications

1. Embout de récipient (1) de liquide destiné à s'adapter sur un embout de réservoir (2) de liquide pour transférer de façon étanche le liquide du récipient au réservoir, ledit embout de récipient (1) comprenant :
- une entrée (14) destinée à être reliée de façon étanche au récipient de liquide,
- une sortie (16) destinée à être reliée de façon étanche à l'embout de réservoir (2), ladite sortie (16) étant en communication fluidique avec l'entrée (14),
- un dispositif de fermeture (28) mobile entre une position fermée, dans laquelle le dispositif de fermeture (28) empêche l'écoulement de liquide au travers de la sortie (16), et une position ouverte, dans laquelle le dispositif de fermeture (28) autorise l'écoulement de liquide au travers de la sortie (16),
- un dispositif de connexion étanche de l'embout de récipient (1) sur l'embout de réservoir (2) destiné à coopérer de façon étanche et amovible avec l'embout de réservoir (2),
le dispositif de connexion comprenant :
- un dispositif de serrage (54) autour de l'embout de réservoir (2) déplaçable entre une position écartée, dans laquelle l'embout de récipient (1) peut être inséré autour d'une paroi externe (6) de l'embout de réservoir (2), et une position serrée, dans laquelle le dispositif de serrage (54) coopère de façon étanche avec la paroi externe (6) de l'embout de réservoir (2),
- un dispositif de commande (56) actionnable entre une position rétractée, dans laquelle le dispositif de commande (56) ne coopère pas avec le dispositif de serrage (54), et une position d'écoulement, dans laquelle le dispositif de commande (56) exerce une force de serrage sur le dispositif de serrage (54) dans sa position serrée, le déplacement du dispositif de commande (56) de la position rétractée à la position d'écoulement entraînant le déplacement du dispositif de serrage (54) de la position écartée à la position serrée,
**caractérisé en ce que** le dispositif de commande (56) et le dispositif de fermeture (28) sont réalisés d'une seule pièce, le déplacement du dispositif de commande (56) dans la position d'écoulement entraînant le déplacement du dispositif de fermeture (28) de la position fermée à la position ouverte.

2. Embout de récipient selon la revendication 1, comprenant une paroi (22) s'étendant entre l'entrée (14) et la sortie (16) et définissant une partie d'un volume d'écoulement (18) du liquide, le dispositif de fermeture (28) comprenant un corps mobile (26) pourvu d'un corps d'obturation (34), le corps mobile (26) comprenant une paroi (30) s'étendant entre l'entrée (14) et la sortie (16) et disjointe du corps d'obturation, et le corps mobile (26) étant mobile par rapport à ladite paroi (22) de l'embout entre la position fermée dans laquelle le corps d'obturation (34) est en contact étanche avec la paroi (22) de l'embout et la position ouverte, dans laquelle le corps d'obturation est dégagé de la paroi (22) de l'embout de sorte que le liquide peut s'écouler au travers de la sortie (16).

3. Embout de récipient selon la revendication 2, dans lequel le corps d'obturation (34) est relié à la paroi (30) du corps mobile (26) par une jupe d'étanchéité (36) coopérant de façon étanche avec la paroi (30) du corps mobile (26).

4. Embout de récipient selon l'une quelconque des revendications 1 à 3, comprenant une conduite d'aération (46) s'étendant au travers du volume d'écoulement (18) et isolée de celui-ci, ladite conduite (46) comprenant au moins une entrée d'air centrale (48) solidaire du corps d'obturation (34) de sorte que l'entrée d'air (48) est fermée dans la position fermée du dispositif de fermeture (28) et est en communication avec l'extérieur en position ouverte du dispositif de fermeture (28).

5. Embout de récipient selon l'une quelconque des revendications 1 à 4, comprenant au moins deux bras (29) s'étendant radialement autour de la paroi (22) de l'embout, le dispositif de fermeture (28) comprenant un corps mobile (26) et au moins une zone de connexion (70) reliant le corps mobile (26) au dispositif de commande (56) en passant par une ouverture (72) pratiquée dans chaque bras (29), dans lequel chaque bras (29) comprend en outre au moins une surface de butée (75) en amont de l'ouverture (72) sur laquelle la zone de connexion (70) vient en butée en position fermée.

6. Embout de récipient selon l'une quelconque des revendications 1 à 5, dans lequel le dispositif de serrage (54) comprend au moins deux bras de serrage (58), les bras de serrage (58) présentant sensiblement une forme de griffe.

7. Embout de récipient selon l'une quelconque des revendications 1 à 6, dans lequel le dispositif de commande (56) comprend en outre un dispositif de verrouillage du dispositif de commande (56) en position d'écoulement, le dispositif de verrouillage étant mobile entre une position déverrouillée, lorsque le dispositif de commande (56) se déplace entre la position rétractée et la position d'écoulement, et une position verrouillée, lorsque le dispositif de commande (56) atteint la position d'écoulement, le dispositif de verrouillage étant agencé pour maintenir le dispositif de commande (56) dans la position d'écoulement lorsqu'il est dans la position de verrouillage, le passage du dispositif de verrouillage de la position déverrouillée à la position verrouillée provoquant un déclic sonore.

8. Embout de récipient selon l'une quelconque des revendications 1 à 7, comprenant en outre un dispositif de blocage, mobile entre une position de blocage, dans laquelle le dispositif de blocage empêche le déplacement du dispositif de fermeture (28) de la position fermée à la position ouverte, et une position de déblocage, dans laquelle le dispositif de fermeture (28) peut se déplacer entre les positions ouverte et fermée.

9. Ensemble de connexion d'un récipient de liquide à un réservoir de liquide, comprenant un embout de récipient (1) selon l'une quelconque des revendications 1 à 8 et un embout de réservoir (2) comprenant une paroi externe (6) dont au moins un tronçon (10) est lisse, l'embout de récipient (1) étant fixé de façon étanche sur l'embout de réservoir (2) par la coopération du dispositif de serrage (54) avec le tronçon lisse (10) de la paroi externe (6) lorsque ledit dispositif de serrage (54) est en position serrée.

10. Récipient de liquide définissant un volume interne apte à contenir un liquide et comprenant une ouverture de sortie par laquelle le liquide peut s'écouler hors du volume interne, ledit récipient comprenant un embout de récipient (1) selon l'une quelconque des revendications 1 à 8 dont l'entrée (14) est en communication fluidique avec le volume interne du récipient par l'intermédiaire de l'ouverture de sortie.

11. Récipient de liquide selon la revendication 10, comprenant un goulot définissant l'ouverture de sortie, l'embout de récipient (1) étant fixé directement sur ledit goulot ou étant relié audit goulot par l'intermédiaire d'un tuyau flexible (13).

## Patentansprüche

1. Behältermundstück (1) für Flüssigkeit, das dazu bestimmt ist, auf ein Speichermundstück (2) für Flüssigkeit zu passen, um die Flüssigkeit auf dichte Weise von dem Behälter auf den Speicher zu übertragen, das Behältermundstück (1) umfassend:
- einen Einlass (14), der dazu bestimmt ist, dicht mit dem Flüssigkeitsbehälter verbunden zu sein,
- einen Auslass (16), der dazu bestimmt ist, dicht mit dem Speichermundstück (2) verbunden zu sein, wobei der Auslass (16) in Fluidverbindung mit dem Einlass (14) ist,
- eine Verschlussvorrichtung (28), die zwischen einer geschlossenen Position, in der die Verschlussvorrichtung (28) den Fluss von Flüssigkeit durch den Auslass (16) verhindert, und einer offenen Position, in der die Verschlussvorrichtung (28) den Fluss von Flüssigkeit durch den Auslass (16) zulässt, beweglich ist,
- eine dichte Verbindungsvorrichtung des Behältermundstücks (1) mit der Speichermundstücks (2), die dazu bestimmt ist, dicht und lösbar mit dem Speichermundstück (2) zusammenzuwirken,
die Verbindungsvorrichtung umfassend:
- eine Klemmvorrichtung (54) um das Speichermundstück (2), das zwischen einer beabstandeten Position, in der das Behältermundstück (1) um eine Außenwand (6) des Speichermundstücks (2) herum eingeführt werden kann, und einer geklemmten Position, in der die Klemmvorrichtung (54) abdichtend mit der Außenwand (6) des Speichermundstücks (2) zusammenwirkt, beweglich ist,
- eine Bedienvorrichtung (56), die zwischen einer zurückgezogenen Position, in der die Bedienvorrichtung (56) nicht mit der Klemmvorrichtung (54) zusammenwirkt, und einer Fließposition, in der die Bedienvorrichtung (56) in ihrer festgezogenen Position eine Klemmkraft auf die Klemmvorrichtung (54) ausübt, betätigt werden kann, wobei die Bewegung der Bedienvorrichtung (56) von der zurückgezogenen Position in die Fließposition die Bewegung der Klemmvorrichtung (54) von der beabstandeten Position in die festgeklemmte Position bewirkt,
**dadurch gekennzeichnet, dass** die Bedienvorrichtung (56) und die Verschlussvorrichtung (28) aus einem Stück gefertigt sind, wobei die Bewegung der Bedienvorrichtung (56) in die Fließposition die Bewegung der Verschlussvorrichtung (28) von der geschlossenen Position in die offene Position bewirkt.

2. Behältermundstück nach Anspruch 1, umfassend eine Wand (22), die sich zwischen dem Einlass (14) und dem Auslass (16) erstreckt und einen Abschnitt eines Strömungsvolumens (18) der Flüssigkeit definiert, die Verschlussvorrichtung (28) umfassend einen beweglichen Körper (26), der mit einem Verschlusskörper (34) versehen ist, der bewegliche Körper (26) umfassend eine Wand (30), die sich zwischen dem Einlass (14) und dem Auslass (16) erstreckt und von dem Verschlusskörper getrennt ist, und wobei der bewegliche Körper (26) in Bezug auf die Wand (22) des Mundstücks zwischen der geschlossenen Position, in der der Verschlusskörper (34) in abdichtendem Kontakt mit der Mundstückwand (22) ist, und der offenen Position, in der der Verschlusskörper von der Wand (22) des Mundstücks gelöst ist, sodass die Flüssigkeit durch den Auslass (16) fließen kann, beweglich ist.

3. Behältermundstück nach Anspruch 2, wobei der Verschlusskörper (34) über eine Dichtschürze (36), die dicht mit der Wand (30) des beweglichen Körpers (26) zusammenwirkt, mit der Wand (30) des beweglichen Körpers (26) verbunden ist.

4. Behältermundstück nach einem der Ansprüche 1 bis 3, umfassend einen Belüftungskanal (46), der sich durch das Strömungsvolumen (18) erstreckt und davon isoliert ist, der Kanal (46) mindestens umfassend einen mittleren Lufteinlass (48), der fest mit dem Verschlusskörper (34) verbunden ist, sodass der Lufteinlass (48) in der geschlossenen Position der Verschlussvorrichtung (28) geschlossen ist und in der offenen Position der Verschlussvorrichtung (28) mit der Außenseite in Verbindung ist.

5. Behältermundstück nach einem der Ansprüche 1 bis 4, umfassend mindestens zwei Arme (29), die sich radial um die Wand (22) des Mundstücks erstrecken, die Verschlussvorrichtung (28) umfassend einen beweglichen Körper (26) und mindestens einen Verbindungsbereich (70), der den beweglichen Körper (26) mit der Bedienvorrichtung (56) durch eine Öffnung (72) verlaufend verbindet, die in jedem Arm (29) ausgebildet ist, wobei jeder Arm (29) ferner mindestens eine Anschlagfläche (75) stromaufwärts von der Öffnung (72) umfasst, an die der Verbindungsbereich (70) in der geschlossenen Position anliegt.

6. Behältermundstück nach einem der Ansprüche 1 bis 5, wobei die Klemmvorrichtung (54) mindestens zwei Klemmarme (58) umfasst, wobei die Klemmarme (58) im Wesentlichen eine Krallenform aufweisen.

7. Behältermundstück nach einem der Ansprüche 1 bis 6, wobei die Steuervorrichtung (56) ferner eine Vorrichtung zum Verriegeln der Steuervorrichtung (56) in der Fließposition umfasst, wobei die Verriegelungsvorrichtung zwischen einer entriegelten Position, wenn die Bedienvorrichtung (56) zwischen der zurückgezogenen Position und der Ausflussposition bewegt, und einer verriegelten Position, wenn die Bedienvorrichtung (56) die Fließposition erreicht, bewegbar ist, wobei die Verriegelungsvorrichtung angeordnet ist, um die Bedienvorrichtung (56) in der Fließposition zu halten, wenn sie in der Verriegelungsposition ist, wobei der Übergang der Verriegelungsvorrichtung von der entriegelten Position in die verriegelte Position ein akustisches Einrasten bewirkt.

8. Behältermundstück nach einem der Ansprüche 1 bis 7, ferner umfassend eine Absperrvorrichtung, die zwischen einer Absperrposition, in der die Absperrvorrichtung die Bewegung der Verschlussvorrichtung (28) von der geschlossenen Position in die offene Position verhindert, und einer Freigabeposition, in der sich die Verschlussvorrichtung (28) zwischen der offenen und der geschlossenen Position bewegen kann, bewegbar ist.

9. Verbindungsanordnung eines Flüssigkeitsbehälters mit einem Flüssigkeitsspeicher, umfassend ein Behältermundstück (1) nach einem der Ansprüche 1 bis 8 und ein Speichermundstück (2), umfassend eine Außenwand (6), wovon mindestens ein Abschnitt (10) glatt ist, wobei das Behältermundstück (1) durch das Zusammenwirken der Klemmvorrichtung (54) auf dichte Weise mit dem glatten Abschnitt (10) der Außenwand (6) an dem Speichermundstück (2) befestigt ist, wenn die Klemmvorrichtung (54) in Klemmposition ist.

10. Flüssigkeitsbehälter, der ein Innenvolumen definiert, das geeignet ist, eine Flüssigkeit zu enthalten, und eine Auslassöffnung umfasst, durch die die Flüssigkeit aus dem Innenvolumen ausfließen kann, der Behälter umfassend ein Behältermundstück (1) nach einem der Ansprüche 1 bis 8, dessen Einlass (14) über die Auslassöffnung in Fluidverbindung mit dem Innenvolumen des Behälters ist.

11. Flüssigkeitsbehälter nach Anspruch 10, umfassend einen Hals, der die Auslassöffnung definiert, wobei das Behältermundstück (1) direkt an dem Hals befestigt ist oder über einen flexiblen Schlauch (13) mit dem Hals verbunden ist.

## Claims

1. A liquid container spout (1) for fitting onto a liquid tank spout (2) to sealingly transfer liquid from the container to the tank, said container spout (1) comprising:
- an inlet (14) for sealed connection to the liquid container,
- an outlet (16) for sealed connection to the tank spout (2), said outlet (16) being in fluid communication with the inlet (14),
- a closure device (28) movable between a closed position, in which the closure device (28) prevents the flow of liquid through the outlet (16), and an open position, in which the closure device (28) allows the flow of liquid through the outlet (16),
- a device for sealingly connecting the container spout (1) to the tank spout (2) intended to sealingly and detachably engage with the tank spout (2),
the connection device comprising:
- a clamping device (54) around the tank spout (2) movable between a separated position, in which the container spout (1) can be inserted (2) around an outer wall (6) of the tank spout (2), and a clamped position, in which the clamping device (54) sealingly engages the outer wall (6) of the tank spout (2),
- a control device (56) operable between a retracted position, in which the control device (56) does not engage the clamping device (54), and a flow position, in which the control device (56) exerts a clamping force on the clamping device (54) in its clamped position, the movement of the control device (56) from the retracted position to the flow position causing the clamping device (54) to move from the separated position to the clamped position,
**characterised in that** the control device (56) and the closure device (28) are made of the same part, the movement of the control device (56) into the flow position causing the closure device (28) to move from the closed position into the open position.

2. The container spout according to claim 1, comprising a wall (22) extending between the inlet (14) and the outlet (16) and defining part of a flow volume (18) of the liquid, the closure device (28) comprising a movable body (26) provided with a closure body (34), the movable body (26) comprising a wall (30) extending between the inlet (14) and the outlet (16) and separate from the closure body, and the movable body (26) being movable relative to said wall (22) of the spout between the closed position in which the closure body (34) is in sealing contact with the spout wall (22) and the open position, in which the closure body is disengaged from the spout wall (22) so that liquid can flow through the outlet (16).

3. The container spout according to claim 2, wherein the closure body (34) is connected to the wall (30) of the movable body (26) by means of a sealing skirt (36) sealingly engaging the wall (30) of the movable body (26).

4. The container spout according to any one of claims 1 to 3, comprising a venting duct (46) extending through and isolated from the flow volume (18), said duct (46) comprising at least one central air inlet (48) integral with the closure body (34) such that the air inlet (48) is closed in the closed position of the closure device (28) and is in communication with the outside in the open position of the closure device (28).

5. The container spout according to any one of claims 1 to 4, comprising at least two arms (29) extending radially around the wall (22) of the spout, the closure device (28) comprising a movable body (26) and at least one connection area (70) connecting the movable body (26) to the control device (56) through an opening (72) in each arm (29), wherein each arm (29) further comprises at least one abutment surface (75) upstream of the opening (72) against which the connection area (70) abuts in the closed position.

6. The container spout according to any one of claims 1 to 5 wherein the clamping device (54) comprises at least two clamping arms (58), the clamping arms (58) being substantially claw-shaped.

7. The container spout according to any one of claims 1 to 6 wherein the control device (56) further comprises a locking device for locking the control device (56) in the flow position, the locking device being movable between an unlocked position, when the control device (56) is moving between the retracted position and the flow position, and a locked position, when the control device (56) reaches the flow position, the locking device being arranged to hold the control device (56) in the flow position when in the locking position, the movement of the locking device from the unlocked position to the locked position causing an audible click.

8. The container spout according to any one of claims 1 to 7 further comprising a blocking device, movable between a blocking position, in which the blocking device prevents the closure device (28) from moving from the closed position to the open position, and a release position, in which the closure device (28) can move between the open and closed positions.

9. An assembly for connecting a liquid container to a liquid tank, comprising a container spout (1) according to any one of claims 1 to 8 and a tank spout (2) comprising an outer wall (6) of which at least one section (10) is smooth, the container spout (1) being sealingly attached to the tank spout (2) by the engagement of the clamping device (54) with the smooth section (10) of the outer wall (6) when said clamping device (54) is in the clamped position.

10. A liquid container defining an internal volume adapted to contain a liquid and comprising an outlet opening through which the liquid can flow out from the internal volume, said container comprising a container spout (1) according to any one of claims 1 to 8 whose inlet (14) is in fluid communication with the internal volume of the container via the outlet opening.

11. The liquid container according to claim 10, comprising a neck defining the outlet opening, the container spout (1) being attached directly to said neck or being connected to said neck via a flexible hose (13).
